(19) Europäisches Patentamt
European Patent Office
Office européen des brevets

(11) **EP 3 163 347 B1**

(12) **EUROPEAN PATENT SPECIFICATION**

(45) Date of publication and mention
of the grant of the patent:
**30.10.2019 Bulletin 2019/44**

(51) Int Cl.:
*G02B 5/18* *(2006.01)*          *G02B 19/00* *(2006.01)*
*G02B 27/20* *(2006.01)*          *G02B 27/42* *(2006.01)*
*G02B 13/00* *(2006.01)*

(21) Application number: **15192608.6**

(22) Date of filing: **02.11.2015**

(54) **COLLIMATING LENS**

KOLLIMATORLINSE

LENTILLE DE COLLIMATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2017 Bulletin 2017/18**

(73) Proprietor: **Himax Technologies Limited**
**Tainan City (TW)**

(72) Inventors:
• **LIN, Han-Ching**
**74148 Tainan City (TW)**

• **LU, Yin Dong**
**74148 Tainan City (TW)**
• **KUO, Han Yi**
**74148 Tainan City (TW)**

(74) Representative: **Karakatsanis, Georgios**
**Haft Karakatsanis Patentanwaltskanzlei**
**Dietlindenstrasse 18**
**80802 München (DE)**

(56) References cited:
**US-A1- 2002 012 157      US-A1- 2006 262 416**
**US-A1- 2007 275 505      US-A1- 2011 001 865**
**US-A1- 2015 062 404**

**Description**

**BACKGROUND OF THE INVENTION**

**1. FIELD OF THE INVENTION**

The present invention generally relates to a collimating lens, and more particularly to a collimating lens with a diffraction lens.

**2. DESCRIPTION OF RELATED ART**

A collimating lens is an optical device that aligns light beams in a specific direction to make collimated light or parallel rays. Accordingly, light does not disperse with distance, or at least, will disperse minimally. The collimating lens may be used with a light source such as a laser diode.

A conventional collimating lens may consist of a mould-made curved lens composed of glass. As a result, cost is high and overall dimension is large. Moreover, the conventional collimating lens possesses at least one convex surface, which makes assembling the collimating lens difficult. US 2002/012157 discloses an integrated micro-optical system including at least two wafers with at least two optical elements provided on respective surfaces of the at least two wafers. US 2011/001865 discloses an imaging lens including at least one lens block and an aperture stop. The lens block includes a plane-parallel lens substrate and a lens formed of different materials. US 2007/275505 discloses a camera device comprising an image capturing element, a lens element for imaging an object at the image capturing element and a spacer means for maintaining a predetermined distance along the main optical axis through the lens and the image capturing element, and lens substrate for carrying the lens wherein the spacer means comprises an adhesive layer. US 2015/062404 discloses an image-capturing lens including a central portion and a periphery portion. The central portion includes a plurality of optical elements arranged in a circular fashion, and each of the optical elements differs in thickness. The periphery portion extends peripherally from the central portion and has a constant thickness. US 2006/262416 discloses wafer scale lenses having a diffraction surface as well as a refractive surface, and an optical system having the same.

For the foregoing reasons, a need has arisen to propose a novel collimating lens to eliminate drawbacks of the conventional collimating lens.

**SUMMARY OF THE INVENTION**

In view of the foregoing, it is an object of the embodiment of the present invention to provide a collimating lens with compact dimension at low cost to facilitate the assembly of the collimating lens.

Collimating lenses according the the invention are defined in appended independent claims 1, 4 and 7.

According to one embodiment, a collimating lens includes at least two lens groups, each having an aspherical surface. The collimating lens includes a flat diffraction lens disposed nearest to an image plane. The collimating lens of one embodiment possesses no convex outer surface.

**BRIEF DESCRIPTION OF THE DRAWINGS**

FIG. 1A shows a lens arrangement of a collimating lens according to a first embodiment of the present invention;
FIG. 1B shows an exemplary ray diagram of FIG. 1A;
FIG. 2A shows a lens arrangement of a collimating lens according to a second embodiment of the present invention;
FIG. 2B shows an exemplary ray diagram of FIG. 2A;
FIG. 3A shows a lens arrangement of a collimating lens according to a third embodiment of the present invention; and
FIG. 3B shows an exemplary ray diagram of FIG. 3A.

**DETAILED DESCRIPTION OF THE INVENTION**

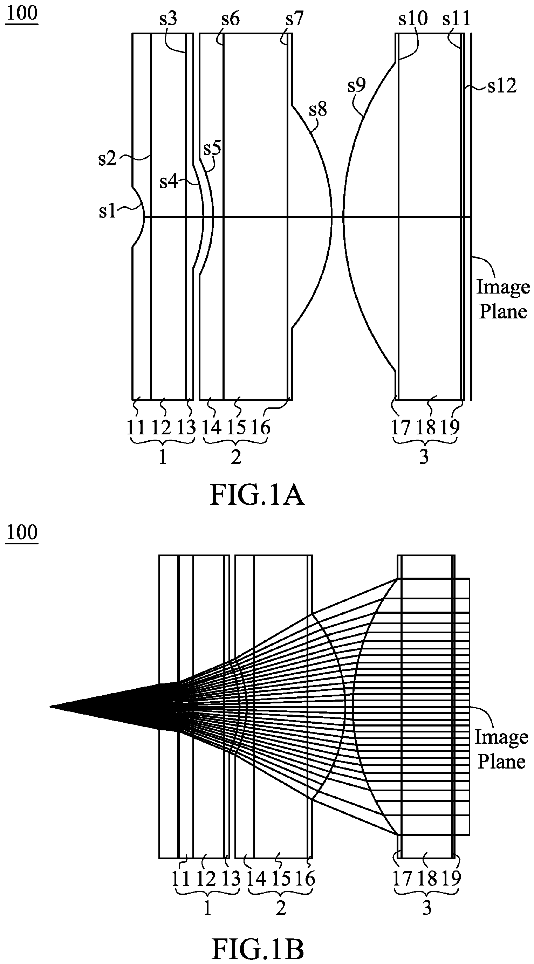

FIG. 1A shows a lens arrangement of a collimating lens 100 according to a first embodiment of the present invention, and FIG. 1B shows an exemplary ray diagram of FIG. 1A. The collimating lens 100 of the first embodiment and collimating lenses of other embodiments as described in the specification may be preferably fabricated by wafer-level optics (WLO) technique. The collimating lens 100 of the first embodiment and collimating lenses of other embodiments as described in the specification may be composed of a transparent material such as glass or plastic. In the drawing, the left-hand side of the collimating lens 100 faces an object, and the right-hand side of the collimating lens 100 faces an image plane.

In the first embodiment, the collimating lens 100 may include a first lens group 1, a second lens group 2 and a third lens group 3 in the order from the object side to the image side. Specifically, the first lens group 1 may include, in the order from the object side to the image side, a negative-powered first lens 11 (that is, a lens with negative refractive power), a flat second lens 12 (that is, a lens with a planar object-side surface and a planar image-side surface), and a positive-powered third lens 13 (that is, a lens with positive refractive power). To be more specific, the negative-powered first lens 11 has an aspherical concave object-side surface s1 (with a negative radius) and a planar image-side surface s2. The flat second lens 12 has a planar object-side surface s2 and a planar image-side surface s3. The positive-powered third lens 13 has a planar object-side surface s3 and an aspherical convex image-side surface s4. In the embodiment, the negative-powered first lens 11 is in substantially contact with the flat second lens 12, which is further in substantially contact with the positive-powered third lens 13.

The second lens group 2 may include, in the order from the object side to the image side, a negative-powered fourth lens 14, a flat fifth lens 15, and a positive-powered sixth lens 16. To be more specific, the negative-powered fourth lens 14 has an aspherical concave object-side surface s5 (with a negative radius) and a planar image-side surface s6. The flat fifth lens 15 has a planar object-side surface s6 and a planar image-side surface s7. The positive-powered sixth lens 16 has a planar object-side surface s7 and an aspherical convex image-side surface s8. In the embodiment, the negative-powered fourth lens 14 is in substantially contact with the flat fifth lens 15, which is further in substantially contact with the positive-powered sixth lens 16.

The third lens group 3 may include, in the order from the object side to the image side, a positive-powered seventh lens 17, a flat eighth lens 18, and a flat diffraction ninth lens 19. To be more specific, the positive-powered seventh lens 17 has an aspherical convex object-side surface s9 (with a positive radius) and a planar image-side surface s10. The flat eighth lens 18 has a planar object-side surface s10 and a planar image-side surface s11. The flat diffraction ninth lens 19 has a planar object-side surface s11 and a planar image-side surface s12. In the embodiment, the positive-powered seventh lens 17 is in substantially contact with the flat eighth lens 18, which is further in substantially contact with the flat diffraction ninth lens 19.

Generally speaking, the collimating lens 100 of the embodiment has at least two aspherical surfaces, one of which has a positive radius and the other of which has a negative radius. For example, the collimating lens 100 has the aspherical concave object-side surface s1 with a negative radius and the aspherical convex object-side surface s9 with a positive radius.

According to one aspect of the embodiment, the negative-powered first lens 11, the positive-powered third lens 13, the negative-powered fourth lens 14, the positive-powered sixth lens 16, the positive-powered seventh lens 17 and the flat diffraction ninth lens 19 have a refractive index ranging between 1.5 and 1.6, and have an Abbe number ranging between 31 and 48.

According to another aspect of the embodiment, the flat second lens 12, the flat fifth lens 15 and the flat eighth lens 18 have a refractive index ranging between 1.5 and 1.6, and have an Abbe number ranging between 45 and 65.

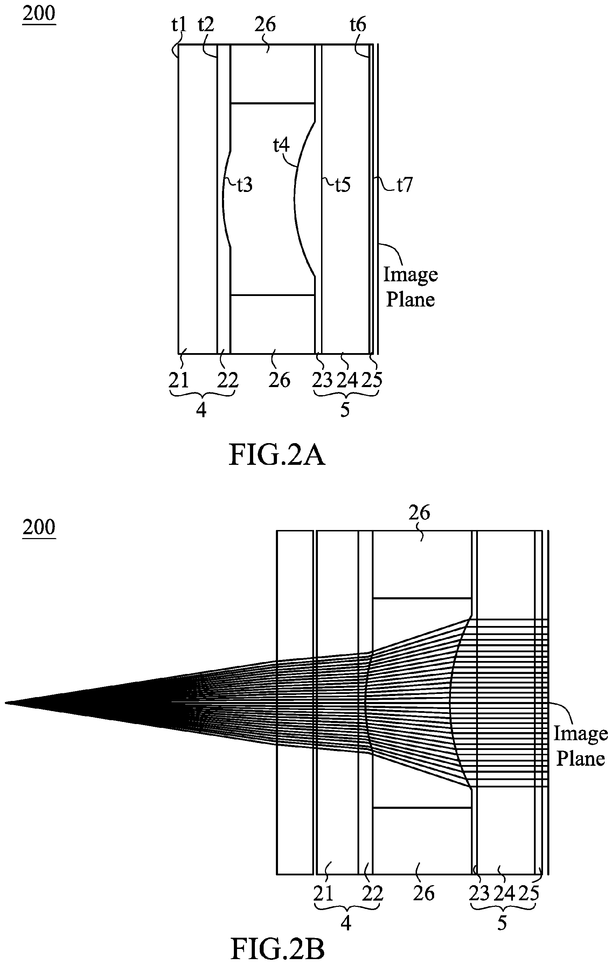

FIG. 2A shows a lens arrangement of a collimating lens 200 according to a second embodiment of the present invention, and FIG. 2B shows an exemplary ray diagram of FIG. 2A.

In the second embodiment, the collimating lens 200 may include a first lens group 4 and a second lens group 5 in the order from the object side to the image side. Specifically, the first lens group 4 may include, in the order from the object side to the image side, a flat first lens 21 and a negative-powered second lens 22. To be more specific, the flat first lens 21 has a planar object-side surface t1 and a planar image-side surface t2. The negative-powered second lens 22 has a planar object-side surface t2 and an aspherical concave image-side surface t3 (with a negative radius). In the embodiment, the flat first lens 21 is in substantially contact with the negative-powered second lens 22.

The second lens group 5 may include, in the order from the object side to the image side, a positive-powered third lens 23, a flat fourth lens 24, and a flat diffraction fifth lens 25. To be more specific, the positive-powered third lens 23 has an aspherical convex object-side surface t4 (with a positive radius) and a planar image-side surface t5. The flat fourth lens 24 has a planar object-side surface t5 and a planar image-side surface t6. The flat diffraction fifth lens 25 has a planar object-side surface t6 and a planar image-side surface t7. In the embodiment, the positive-powered third lens 23 is in substantially contact with the flat fourth lens 24, which is further in substantially contact with the flat diffraction fifth lens 25.

The collimating lens 200 of the second embodiment may further include a ring spacer 26, which is disposed between and in contact with peripheries of the first lens group 4 and the second lens group 5, such that the first lens group 4 may be coupled with the second lend group 5.

Generally speaking, the collimating lens 200 of the embodiment has at least two aspherical surfaces, one of which has a positive radius and the other of which has a negative radius. For example, the collimating lens 200 has the aspherical concave image-side surface t3 with a negative radius and the aspherical convex object-side surface t4 with a positive radius.

According to one aspect of the embodiment, the negative-powered second lens 22, the positive-powered third lens 23 and the flat diffraction fifth lens 25 have a refractive index ranging between 1.5 and 1.6, and have an Abbe number ranging between 31 and 48.

According to another aspect of the embodiment, the flat first lens 21 and the flat fourth lens 24 have a refractive index ranging between 1.5 and 1.6, and have an Abbe number ranging between 45 and 65.

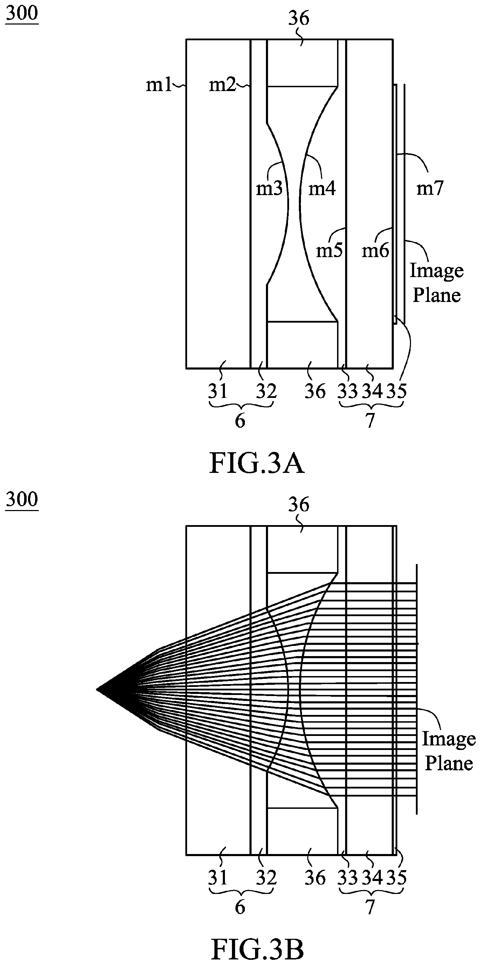

FIG. 3A shows a lens arrangement of a collimating lens 300 according to a third embodiment of the present invention, and FIG. 3B shows an exemplary ray diagram of FIG. 3A.

In the third embodiment, the collimating lens 300 may include a first lens group 6 and a second lens group 7 in the order from the object side to the image side. Specifically, the first lens group 6 may include, in the order from the object side to the image side, a flat first lens 31 and a positive-powered second lens 32. To be more specific, the flat first lens 31 has a planar object-side surface m1 and a planar image-side surface m2. The positive-powered second lens 32 has a planar object-side surface m2 and an aspherical convex image-side surface m3 (with a positive radius). In the embodiment, the flat first lens 31 is in substantially contact with the positive-powered second lens 32.

The second lens group 7 may include, in the order from the object side to the image side, a positive-powered third lens 33, a flat fourth lens 34, and a flat diffraction fifth lens 35. To be more specific, the positive-powered third lens 33 has an aspherical convex object-side surface m4 (with a positive radius) and a planar image-side surface m5. The flat fourth lens 34 has a planar object-side surface m5 and a planar image-side surface m6. The flat diffraction fifth lens 35 has a planar object-side surface m6 and a planar image-side surface m7. In the embodiment, the positive-powered third lens 33 is in substantially contact with the flat fourth lens 34, which is in substantially contact with the flat diffraction fifth lens 35.

The collimating lens 300 of the third embodiment may further include a ring spacer 36, which is disposed between and in contact with peripheries of the first lens group 6 and the second lens group 7, such that the first lens group 6 may be coupled with the second lend group 7.

Generally speaking, the collimating lens 300 of the embodiment has at least two aspherical surfaces. For example, the collimating lens 300 has the aspherical convex image-side surface m3 and the aspherical convex object-side surface m4.

According to one aspect of the embodiment, the positive-powered second lens 32, the positive-powered third lens 33 and the flat diffraction fifth lens 35 have a refractive index ranging between 1.5 and 1.6, and have an Abbe number ranging between 31 and 48.

According to another aspect of the embodiment, the flat first lens 31 and the flat fourth lens 34 have a refractive index ranging between 1.5 and 1.6, and have an Abbe number ranging between 45 and 65.

According to the embodiments discussed above, a collimating lens with reduced dimension may be made by wafer-level optics (WLO) technique at low cost. Moreover, the collimating lens of the embodiments possesses no convex outer surface, thereby facilitating the assembly of the collimating lens.

Moreover, as the flat diffraction lens (19, 25 or 35) has a planar image-side surface (s12, t7 or m7), on which a diffractive optical elements (DOEs) pattern (not shown) may be directly formed, an additional glass plate as in the conventional art is thus not required and may be omitted, thereby reducing the thickness of the collimating lens.

The aspheric surface (e.g., s1, s4, s5, s8, s9, t3, t4, m3 or m4) may be defined by the following equation:

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

where z is a distance from a vertex of lens in an optical axis direction, r is a distance in the direction perpendicular to the optical axis, c is a reciprocal of radius of curvature on vertex of lens, k is a conic constant and $\alpha_1$ to $\alpha_8$ are aspheric coefficients.

Although specific embodiments have been illustrated and described, it will be appreciated by those skilled in the art that various modifications may be made without departing from the scope of the present invention, which is intended to be limited solely by the appended claims.

**Claims**

1. A collimating lens (100) for collimating an input beam and accordingly forming an output beam, consisting in:

   a first lens group (1), a second lens group (2) and a third lens group (3) disposed in an order from an input-beam side to an output-beam side, each of the first lens group and the third lens group having an aspherical surface (s1/s9); and

a flat diffraction lens (19) arranged in the third lens group and disposed nearest to the output beam, **characterized in that** the first lens group includes a negative-powered first lens (11) with an aspherical concave surface (s1) on the input-beam side, a flat second lens (12) and a positive-powered third lens (13) in the order from the input-beam side to the output-beam side, the negative-powered first lens is in contact with the flat second lens, and the positive-powered third lens is in contact with the flat second lens; the second lens group includes a negative-powered fourth lens (14), a flat fifth lens (15) and a positive-powered sixth lens (16) in the order from the input-beam side to the output-beam side, the negative-powered fourth lens is in contact with the flat fifth lens, and the positive-powered sixth lens is in contact with the flat fifth lens; and the third lens group includes a positive-powered seventh lens (17) with an aspherical convex surface (s9) on the input-beam side, a flat eighth lens (18) and the flat diffraction lens (19) in the order from the input-beam side to the output-beam side, the positive-powered seventh lens is in contact with the flat eighth lens, and the flat diffraction lens is in contact with the flat eighth lens.

2. The collimating lens of claim 1, wherein the negative-powered first lens, the positive-powered third lens, the negative-powered fourth lens, the positive-powered sixth lens, the positive-powered seventh lens and the flat diffraction lens have a refractive index ranging between 1.5 and 1.6, and have an Abbe number ranging between 31 and 48.

3. The collimating lens of claim 1, wherein the flat second lens, the flat fifth lens and the flat eighth lens have a refractive index ranging between 1.5 and 1.6, and have an Abbe number ranging between 45 and 65.

4. A collimating lens (200) for collimating an input beam and accordingly forming an output beam, consisting in:

a first lens group (4) and a second lens group (5) disposed in an order from an input-beam side to an output-beam side, each of the first lens group and the second lens group having an aspherical surface (t3/t4); a flat diffraction lens (25) arranged in the second lens group and disposed nearest to the output beam; and a ring spacer (26) disposed between and in contact with peripheries of the first lens group and the second lens group,

**characterized in that** the first lens group includes a flat first lens (21) and a negative-powered second lens (22) with an aspherical concave surface (t3) on the output-beam side in the order from the input-beam side to the output-beam side, and the negative-powered second lens is in contact with the flat first lens; and the second lens group includes a positive-powered third lens (23) with an aspherical convex surface (t4) on the input-beam side, a flat fourth lens (24) and the flat diffraction lens (25) in the order from the input-beam side to the output-beam side, the positive-powered third lens is in contact with the flat fourth lens, and the flat diffraction lens is in contact with the flat fourth lens.

5. The collimating lens of claim 4, wherein the negative-powered second lens, the positive-powered third lens and the flat diffraction lens have a refractive index ranging between 1.5 and 1.6, and have an Abbe number ranging between 31 and 48.

6. The collimating lens of claim 4, wherein the flat first lens and the flat fourth lens have a refractive index ranging between 1.5 and 1.6, and have an Abbe number ranging between 45 and 65.

7. A collimating lens (300) for collimating an input beam and accordingly forming an output beam, consisting in:

a first lens group (6) and a second lens group (7) disposed in an order from an input-beam side to an output-beam side, each of the first lens group and the second lens group having an aspherical surface (m3/m4); a flat diffraction lens (35) arranged in the second lens group and disposed nearest to the output beam; and a ring spacer (36) disposed between and in contact with peripheries of the first lens group and the second lens group,

**characterized in that** the first lens group includes a flat first lens (31) and a positive-powered second lens (32) with an aspherical convex surface (m3) on the output-beam side in the order from the input-beam side to the output-beam side, and the positive-powered second lens is in contact with the flat first lens; and the second lens group includes a positive-powered third lens (33) with an aspherical convex surface (m4) on the input-beam side, a flat fourth lens (34) and the flat diffraction lens (35) in the order from the input-beam side to the output-beam side, the positive-powered third lens is in contact with the flat fourth lens, and the flat diffraction lens is in contact with the flat fourth lens.

8. The collimating lens of claim 7, wherein the positive-powered second lens, the positive-powered third lens and the flat diffraction lens have a refractive index ranging between 1.5 and 1.6, and have an Abbe number ranging between 31 and 48.

9. The collimating lens of claim 7, wherein the flat first lens and the flat fourth lens have a refractive index ranging between 1.5 and 1.6, and have an Abbe number ranging between 45 and 65.

**Patentansprüche**

1. Kollimatorlinse (100) zum Kollimieren eines Eingangsstrahls und dementsprechenden Bilden eines Ausgangsstrahls, bestehend aus:

   einer ersten Linsengruppe (1), einer zweiten Linsengruppe (2) und einer dritten Linsengruppe (3), angeordnet in einer Reihenfolge von einer Eingangsstrahlseite zu einer Ausgangsstrahlseite, wobei jede aus der ersten Linsengruppe und der dritten Linsengruppe eine asphärische Oberfläche (s1/s9) aufweist; und
   einer flachen Diffraktionslinse (19), angeordnet in der dritten Linsengruppe und dem Ausgangsstrahl am nächsten platziert,
   **dadurch gekennzeichnet, dass** die erste Linsengruppe eine erste Linse (11) unter negativer Energie mit einer asphärischen konkaven Oberfläche (s1) auf der Eingangsstrahlseite, eine flache zweite Linse (12) und eine dritte Linse (13) unter positiver Energie in der Reihenfolge von der Eingangsstrahlseite zur Ausgangsstrahlseite umfasst, wobei die erste Linse unter negativer Energie in Kontakt mit der flachen zweiten Linse steht und die dritte Linse unter positiver Energie mit der flachen zweiten Linse in Kontakt steht; die zweite Linsengruppe eine vierte Linse (14) unter negativer Energie, eine flache fünfte Linse (15) und eine sechste Linse (16) unter positiver Energie in der Reihenfolge von der Eingangsstrahlseite zur Ausgangsstrahlseite umfasst, wobei die vierte Linse unter negativer Energie mit der flachen fünften Linse in Kontakt steht und die sechste Linse unter positiver Energie mit der flachen fünften Linse in Kontakt steht; und die dritte Linsengruppe eine siebte Linse (17) unter positiver Energie mit einer asphärischen konvexen Oberfläche (s9) an der Eingangsstrahlseite, eine flache achte Linse (18) und die flache Diffraktionslinse (19) in der Reihenfolge von der Eingangsstrahlseite zur Ausgangsstrahlseite umfasst, wobei die siebte Linse unter positiver Energie mit der flachen achten Linse in Kontakt steht und die flache Diffraktionslinse mit der flachen achten Linse in Kontakt steht.

2. Kollimatorlinse aus Anspruch 1, wobei die erste Linse unter negativer Energie, die dritte Linse unter positiver Energie, die vierte Linse unter negativer Energie, die sechste Linse unter positiver Energie, die siebte Linse unter positiver Energie und die flache Diffraktionslinse einen Refraktionsindex zwischen 1,5 und 1,6 aufweisen und eine Abbe-Zahl zwischen 31 und 48 aufweisen.

3. Kollimatorlinse aus Anspruch 1, wobei die flache zweiten Linse, die flache fünfte Linse und die flache achte Linse einen Refraktionsindex zwischen 1,5 und 1,6 aufweisen und eine Abbe-Zahl zwischen 45 und 65 aufweisen.

4. Kollimatorlinse (200) zum Kollimieren eines Eingangsstrahls und dementsprechenden Bilden eines Ausgangsstrahls, bestehend aus:

   einer erste Linsengruppe (4) und einer zweiten Linsengruppe (5), angeordnet in einer Reihenfolge von einer Eingangsstrahlseite zu einer Ausgangsstrahlseite, wobei jede aus der ersten Linsengruppe und der zweiten Linsengruppe eine asphärische Oberfläche (t3/t4) aufweist;
   einer flachen Diffraktionslinse (25), angeordnet in der zweiten Linsengruppe und dem Ausgangsstrahl am nächsten platziert; und
   einen Ringabstandhalter (26), der zwischen und in Kontakt mit Peripherien der ersten Linsengruppe und der zweiten Linsengruppe angeordnet ist,
   **dadurch gekennzeichnet, dass** die erste Linsengruppe eine flache erste Linse (21) und eine zweite Linse (22) unter negativer Energie mit einer asphärischen konkaven Oberfläche (t3) an der Ausgangsstrahlseite in der Reihenfolge von der Eingangsstrahlseite zur Ausgangsstrahlseite aufweist und die zweite Linse unter negativer Energie mit der flachen ersten Linse in Kontakt steht; und die zweite Linsengruppe eine dritte Linse unter positiver Energie (23) mit einer asphärischen konvexen Oberfläche (t4) an der Eingangsstrahlseite, eine flache vierte Linse (24) und die flache Diffraktionslinse (25) in der Reihenfolge von der Eingangsstrahlseite zur Ausgangsstrahlseite umfasst, wobei die dritte Linse unter positiver Energie mit der flachen vierten Linse in Kontakt steht und die flache Diffraktionslinse mit der flachen vierten Linse in Kontakt steht.

**5.** Kollimatorlinse aus Anspruch 4, wobei die zweite Linse unter negativer Energie, die dritte Linse unter positiver Energie und die flache Diffraktionslinse einen Refraktionsindex zwischen 1,5 und 1,6 aufweisen und eine Abbe-Zahl zwischen 31 und 48 aufweisen.

**6.** Kollimatorlinse aus Anspruch 4, wobei die flache erste Linse und die flache vierte Linse einen Refraktionsindex zwischen 1,5 und 1,6 aufweisen und eine Abbe-Zahl zwischen 45 und 65 aufweisen.

**7.** Kollimatorlinse (300) zum Kollimieren eines Eingangsstrahls und dementsprechenden Bilden eines Ausgangsstrahls, bestehend aus:

einer erste Linsengruppe (6) und einer zweiten Linsengruppe (7), angeordnet in einer Reihenfolge von einer Eingangsstrahlseite zu einer Ausgangsstrahlseite, wobei jede aus der ersten Linsengruppe und der zweiten Linsengruppe eine asphärische Oberfläche (m3/m4) aufweist;
einer flachen Diffraktionslinse (35), angeordnet in der zweiten Linsengruppe und dem Ausgangsstrahl am nächsten platziert; und
einen Ringabstandhalter (36), der zwischen und in Kontakt mit Peripherien der ersten Linsengruppe und der zweiten Linsengruppe angeordnet ist,
**dadurch gekennzeichnet, dass** die erste Linsengruppe eine flache erste Linse (31) und eine zweite Linse (32) unter positiver Energie mit einer asphärischen konvexen Oberfläche (m3) an der Ausgangsstrahlseite in der Reihenfolge von der Eingangsstrahlseite zur Ausgangsstrahlseite aufweist und die zweite Linse unter positiver Energie mit der flachen ersten Linse in Kontakt steht; und die zweite Linsengruppe eine dritte Linse unter positiver Energie (33) mit einer asphärischen konvexen Oberfläche (m4) an der Eingangsstrahlseite, eine flache vierte Linse (34) und die flache Diffraktionslinse (35) in der Reihenfolge von der Eingangsstrahlseite zur Ausgangsstrahlseite umfasst, wobei die dritte Linse unter positiver Energie mit der flachen vierten Linse in Kontakt steht und die flache Diffraktionslinse mit der flachen vierten Linse in Kontakt steht.

**8.** Kollimatorlinse aus Anspruch 7, wobei die zweite Linse unter positiver Energie, die dritte Linse unter positiver Energie und die flache Diffraktionslinse einen Refraktionsindex zwischen 1,5 und 1,6 aufweisen und eine Abbe-Zahl zwischen 31 und 48 aufweisen.

**9.** Kollimatorlinse aus Anspruch 7, wobei die flache erste Linse und die flache vierte Linse einen Refraktionsindex zwischen 1,5 und 1,6 aufweisen und eine Abbe-Zahl zwischen 45 und 65 aufweisen.

**Revendications**

**1.** Lentille de collimation (100) pour la collimation d'un faisceau d'entrée et la formation en conséquence d'un faisceau de sortie, composée de :

un premier groupe de lentilles (1), un deuxième groupe de lentilles (2) et un troisième groupe de lentilles (3) disposés dans un ordre allant d'un côté faisceau d'entrée à un côté faisceau de sortie, chacun du premier groupe de lentilles et du troisième groupe de lentilles ayant une surface asphérique (s1/s9) ; et
une lentille de diffraction plate (19) disposée dans le troisième groupe de lentilles et disposée au plus près du faisceau de sortie,
**caractérisée en ce que** le premier groupe de lentilles inclut une première lentille à puissance négative (11) dotée d'une surface concave asphérique (s1) du côté faisceau d'entrée, une deuxième lentille plate (12) et une troisième lentille à puissance positive (13) dans l'ordre allant du côté faisceau d'entrée au côté faisceau de sortie, que la première lentille à puissance négative est en contact avec la deuxième lentille plate, et que la troisième lentille à puissance positive est en contact avec la deuxième lentille plate ; que le deuxième groupe de lentilles inclut une quatrième lentille à puissance négative (14), une cinquième lentille plate (15) et une sixième lentille à puissance positive (16) dans l'ordre allant du côté faisceau d'entrée au côté faisceau de sortie, que la quatrième lentille à puissance négative est en contact avec la cinquième lentille plate, et que la sixième lentille à puissance positive est en contact avec la cinquième lentille plate ; et que le troisième groupe de lentilles inclut une septième lentille puissance positive (17) dotée d'une surface convexe asphérique (s9) du côté faisceau d'entrée, une huitième lentille plate (18) et la lentille de diffraction plate (19) dans l'ordre allant du côté faisceau d'entrée au côté faisceau de sortie, que la septième lentille à puissance positive est en contact avec la huitième lentille plate, et que la lentille de diffraction plate est en contact avec la huitième lentille plate.

2.  Lentille de collimation selon la revendication 1, dans laquelle la première lentille à puissance négative, la troisième lentille à puissance positive, la quatrième lentille à puissance négative, la sixième lentille à puissance positive, la septième lentille à puissance positive et la lentille de diffraction plate ont un indice de réfraction allant de 1,5 à 1,6 et ont un indice Abbe allant de 31 à 48.

3.  Lentille de collimation selon la revendication 1, dans laquelle la deuxième lentille plate, la cinquième lentille plate et la huitième lentille plate ont un indice de réfraction allant de 1,5 à 1,6 et ont un indice Abbe allant de 45 à 65.

4.  Lentille de collimation (200) pour la collimation d'un faisceau d'entrée et la formation en conséquence d'un faisceau de sortie, composée de :

    un premier groupe de lentilles (4) et un deuxième groupe de lentilles (5) disposés dans un ordre allant d'un côté faisceau d'entrée à un côté faisceau de sortie, chacun du premier groupe de lentilles et du deuxième groupe de lentilles ayant une surface asphérique (t3/t4) ; et
    une lentille de diffraction plate (25) disposée dans le deuxième groupe de lentilles et disposée au plus près du faisceau de sortie ; et
    un espaceur annulaire (26) disposé entre et en contact avec les périphéries du premier groupe de lentilles et du deuxième groupe de lentilles,
    **caractérisée en ce que** le premier groupe de lentilles inclut une première lentille plate (21) et une deuxième lentille à puissance négative (22) dotée d'une surface convexe asphérique (t3) du côté faisceau de sortie dans l'ordre allant du côté faisceau d'entrée au côté faisceau de sortie, et que la deuxième lentille à puissance négative est en contact avec la première lentille plate ; et que le deuxième groupe de lentilles inclut une troisième lentille à puissance positive (23) dotée d'une surface convexe asphérique (t4) du côté faisceau d'entrée, une quatrième lentille plate (24) et la lentille de diffraction plate (25) dans l'ordre allant du côté faisceau d'entrée au côté faisceau de sortie, que la troisième lentille à puissance positive est en contact avec la quatrième lentille plate, et que la lentille de diffraction plate est en contact avec la quatrième lentille plate.

5.  Lentille de collimation selon la revendication 4, dans laquelle la deuxième lentille à puissance négative, la troisième lentille à puissance positive et la lentille de diffraction plate ont un indice de réfraction allant de 1,5 à 1,6 et ont un indice Abbe allant de 31 à 48.

6.  Lentille de collimation selon la revendication 4, dans laquelle la première lentille plate et la quatrième lentille plate ont un indice de réfraction allant de 1,5 à 1,6 et ont un indice Abbe allant de 45 à 65.

7.  Lentille de collimation (300) pour la collimation d'un faisceau d'entrée et la formation en conséquence d'un faisceau de sortie, composée de :

    un premier groupe de lentilles (6) et un deuxième groupe de lentilles (7) disposés dans un ordre allant d'un côté faisceau d'entrée à un côté faisceau de sortie, chacun du premier groupe de lentilles et du deuxième groupe de lentilles ayant une surface asphérique (m3/m4) ;
    une lentille de diffraction plate (35) disposée dans le troisième groupe de lentilles et disposée au plus près du faisceau de sortie ; et
    un espaceur annulaire (36) disposé entre et en contact avec les périphéries du premier groupe de lentilles et du deuxième groupe de lentilles,
    **caractérisée en ce que** le premier groupe de lentilles inclut une première lentille plate (31) et une deuxième lentille à puissance positive (32) dotée d'une surface convexe asphérique (m3) du côté faisceau de sortie dans l'ordre allant du côté faisceau d'entrée au côté faisceau de sortie, et que la deuxième lentille à puissance positive est en contact avec la première lentille plate ; et que le deuxième groupe de lentilles inclut une troisième lentille à puissance positive (33) dotée d'une surface convexe asphérique (m4) du côté faisceau d'entrée, une quatrième lentille plate (34) et la lentille de diffraction plate (35) dans l'ordre allant du côté faisceau d'entrée au côté faisceau de sortie, que la troisième lentille à puissance positive est en contact avec la quatrième lentille plate, et que la lentille de diffraction plate est en contact avec la quatrième lentille plate.

8.  Lentille de collimation selon la revendication 7, dans laquelle la deuxième lentille à puissance positive, la troisième lentille à puissance positive et la lentille de diffraction plate ont un indice de réfraction allant de 1,5 à 1,6 et ont un indice Abbe allant de 31 à 48.

9.  Lentille de collimation selon la revendication 7, dans laquelle la première lentille plate et la quatrième lentille plate ont un indice de réfraction allant de 1,5 à 1,6 et ont un indice Abbe allant de 45 à 65.

100

s3    s6    s7        s10  s11

s2              s5              s9    s12

s4        s8

s1

Image
Plane

11 12 13  14 15 16      17 18 19

1        2          3

**FIG.1A**

100

Image
Plane

11 12 13 14 15 16      17 18 19

1        2          3

**FIG.1B**

200

t1  t2      26        t6

t4

t3      t5      t7

Image
Plane

21    22    26    23 24 25
  4              5

**FIG.2A**

200

26

Image
Plane

21    22    26    23 24 25
  4              5

**FIG.2B**

FIG.3A

FIG.3B

**EP 3 163 347 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002012157 A
- US 2011001865 A
- US 2007275505 A
- US 2015062404 A
- US 2006262416 A